# EUROPEAN PATENT SPECIFICATION

(11) **EP 0 449 626 B1**
(45) Date of publication and mention of the grant of the patent: **24.05.1995**
(21) Application number: 91302735.5
(22) Date of filing: 28.03.1991
(51) Int. Cl.: H04N 9/29, H01F 13/00

(54) **Degaussing circuit**
Entmagnetisierungsschaltung
Circuit de démagnétisation

(30) Priority: 28.03.1990 JP 76661/90
(43) Date of publication of application: 02.10.1991
(73) Proprietor: KABUSHIKI KAISHA TOSHIBA, Kawasaki-shi, Kanagawa-ken 210 (JP)
(72) Inventor: Kamijoh, Naoyoshi, c/o Intellec.Prop.Div., Minato-ku, Tokyo (JP)
(74) Representative: Muir, Ian R.

(56) References cited:
- EP-A- 0 069 840
- US-A- 4 153 858

## Description

The present invention relates generally to a degaussing circuit, and more particularly, to a degaussing circuit for CRT display devices.

The picture quality of a CRT display is deteriorated when the CRT display device is magnetized by the effect of terrestrial magnetism. To overcome this, a CRT display is equipped with a degaussing circuit to degauss the magnetized CRT.

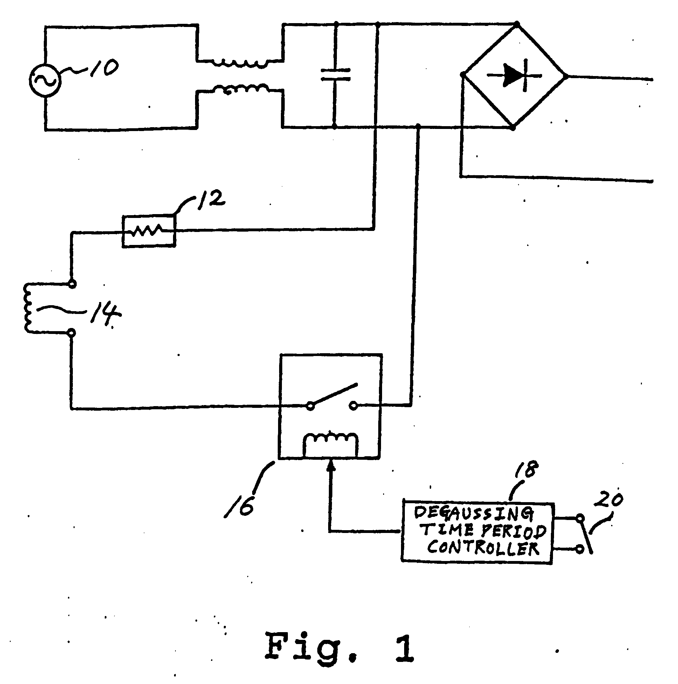

One example of a prior art degaussing circuit is explained hereinafter referring to Figure 1. Shown in Figure 1 is a circuit diagram showing a conventional degaussing circuit. An AC power supply source 10 is connected to a positive temperature coefficient thermistor (referred to as PTC, hereinafter) 12, a degaussing coil 14 and a relay switch 16 in series.

The relay switch 16 is kept closed for a fixed time period by a degaussing time period controller 18 which is interlocking with a manual switch 20 for starting the degaussing operation and applies AC current to the degaussing coil 14.

The PTC 12 is heated when a current is applied thereto. Therefore, the resistance of the PTC 12 is increased.

When the resistance of the PTC 12 has increased, an AC current flowing through the degaussing coil 14 is gradually attenuated and thus, a degaussing effect is obtained.

In the prior art degaussing circuit as shown in Figure 1, the PTC 12 is heated to increase its resistance, resulting in a gradually decreasing AC current being supplied to the degaussing coil 14.

However, once the PTC 12 has been heated, its temperature does not drop immediately and its initial resistance is also not, therefore, restored. As a result, once degaussing has been carried out, another degaussing operation is difficult to carry out immediately after the prior operation, because the required current for degaussing cannot be supplied to the degaussing coil 14 at that time. This is attributable to the fact that the PTC 12, once heated, requires about 10 to 20 mins to dissipate its temperature before the voltage is reapplied and during this time period, the resistance of the PTC 12 does not drop sufficiently to provide the correct initial degaussing current.

Therefore, if an orientation of the CRT display device is frequently changed, it is difficult to degauss the CRT display device immediately for every orientation change.

Further, as the degaussing coil 14 is connected to the AC power supply source, an electrostatic induction from the degaussing circuit to the raster scanning circuits, such as the horizontal oscillation circuit and the vertical oscillation circuit can cause picture fluctuation and a jitter on the screen.

The present invention seeks to provide a degaussing circuit in which the degaussing ability can be immediately restored for successive operations.

The present invention also seeks to provide a degaussing circuit which hardly causes a picture fluctuation and a jitter on the screen during the degaussation.

According to one aspect of the present invention there is provided a degaussing circuit comprising a degaussing coil means and means for feeding an AC degaussing current the amplitude of which decreases with time to the degaussing coil means characterised in that AC degaussing current feed means comprises:-
an oscillator for supplying a high frequency current;
an amplifier means for amplifying the high frequency current to produce said AC degaussing current; and
means for feeding a voltage the amplitude of which decreases with time to said amplifying means to effect a corresponding reducing amplification of said high frequency current.

According to a second aspect of the present invention there is provided a degaussing circuit comprising a degaussing coil means, characterised in that the degaussing circuit further comprises:
an oscillator means for supplying a high frequency current to the degaussing coil means;
an amplifier means for amplifying the high frequency current from the oscillator means for driving the degaussing coil means;
a bias source for activating the amplifier means;
a first capacitor means for applying a gradually reducing bias change of the bias to the amplifier means;
a first switch means for controlling the capacitor means for charging the capacitor means when the switch means has been turned ON and then for causing the gradual reducing of the bias change; and
a time period controller means for regulating the operation period of the switch means thus causing the charge and the discharge of the capacitor means.

A more complete appreciation of the present invention and many of the attendant advantages thereof will be readily obtained as the same becomes better understood by reference to the following detailed description when considered in connection with the accompanying drawings, wherein:
Figure 1 is a circuit diagram showing a conventional degaussing circuit; and
Figure 2 is a circuit diagram showing an embodiment of the degaussing circuit according to the present invention.

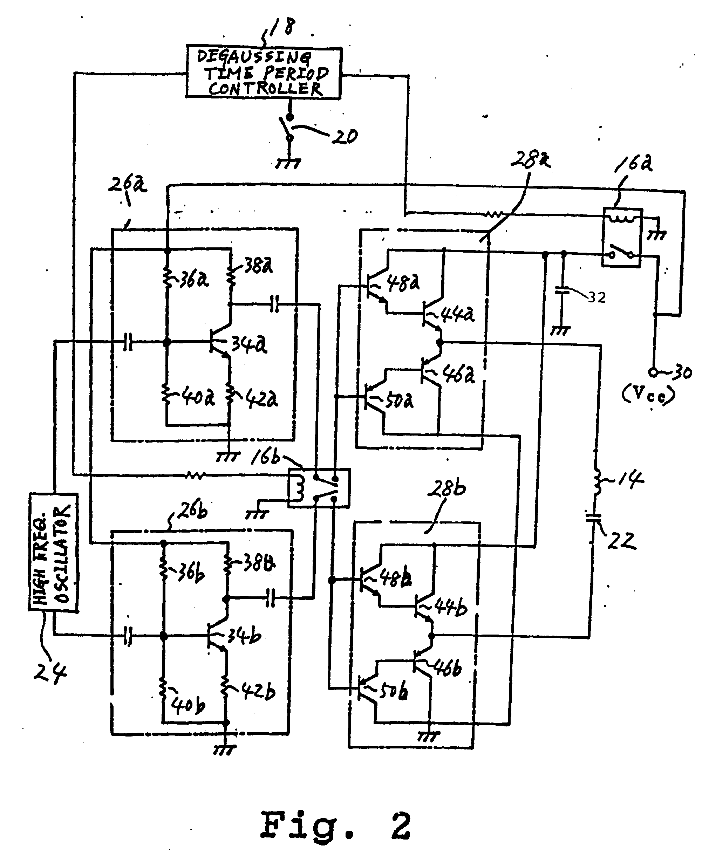

The present invention will be described in detail with reference to FIGURE 2. In the drawing, reference numerals or letters used in FIGURE 1 will be used to designate like or equivalent elements for simplicity of explanation.

In FIGURE 2, the degaussing circuit comprises a degaussing coil 14, a first capacitor 22, an oscillator 24, a pair of pre-amplifiers 26a and 26b, a pair of power amplifiers 28a and 28b, a DC voltage supply source 30 with a DC voltage Vcc, a first relay switch 16a, a second relay switch 16b, a second capacitor 32, a degaussing time period controller 18 and a manual switch 20.

The oscillator 24 generates a pair of high frequency (relative to mains frequency) currents, e.g., at about 1 KHz, which phases are mutually inversed. The pre-amplifiers 26a and 26b amplify the high frequency currents from the oscillator 24, respectively. The power amplifiers 28a and 28b intensify the outputs of the pre-amplifiers 26a and 26b for driving the degaussing coil 14.

The degaussing coil 14 and the first capacitor 22 are coupled in series, so that they constitute a resonance circuit having a resonance frequency equal to the oscillation frequency of the oscillator 24.

The DC voltage supply source 30 supplies the DC voltage Vcc to the pre-amplifiers 26a and 26b and the power amplifiers 28a and 28b. The first relay switch 16a serves to control power supplies for the power amplifiers 28a and 28b. The second relay switch relay switch 16b serves to control the supply of the high frequency current to the degaussing coil 14.

The second capacitor 32 interlocks with the first relay switch 16a for applying a gradually attenuated bias or power supply voltage for the power amplifiers 28a and 28b. Thus, the power of the high frequency current applied to the degaussing coil 14 is also gradually attenuated. This produces the degaussing effect.

The pre-amplifiers 26a and 26b may be conventional ones. For example, the pre-amplifier 26a includes a NPN transistor 34a as an amplifying element. The transistor 34a is biased by resistors 36a, 38a, 40a and 42a. The pre-amplifier 26b also includes another NPN transistor 34b as an amplifying element. The transistor 34b is biased by resistors 36b, 38b, 40b and 42b. Then the high frequency currents are applied to the bases of the transistors 34a and 34b through coupling capacitors 44a and 44b, respectively.

The DC voltage supply source 30 is connected to the ground potential source via the series resistors 36a, 40a and 38a, 42a. The base of the transistor 34a is connected to the voltage dividing point of the series resistors 36a and 40a and the base of the transistor 34b is connected to the voltage dividing point of the series resistors 38a and 42a to apply base bias to the transistors 34a and 34b.

The collectors of the transistors 34a and 34b are connected to the DC voltage supply source 30 via the resistors 38a and 38b. The emitters of the transistors 34a and 34b are connected to the ground potential source via the resistors 42a and 42b. The transistors 34a and 34b amplify AC signals applied to their bases and output through the collectors. However, as the phases of high frequency currents flowing to respective bases are inverted, high frequency currents with mutually inverted phases are output from the collectors of the transistors 34a and 34b.

When the second relay switch 16b is in the ON state, the amplified high frequency currents are supplied to the power amplifiers 28a and 28b from the pre-amplifiers 26a and 26b.

The power amplifiers 28a and 28b may also be conventional ones. For example, the power amplifier 28a includes complementary power transistors 44a and 46a as power amplifying elements. The power transistors 44a and 46b are coupled at their bases to the emitters of the their own Darlington coupling transistors 48a and 50a, respectively. The power amplifier 28b also includes other complementary power transistors 44b and 46b as power amplifying elements. The power transistors 44b and 46b are coupled at their bases to the emitters of their own Darlington coupling transistors 48b and 50b, respectively.

The high frequency currents are applied to the bases of the Darlington coupling transistors 48a and 50a output from the pre-amplifiers 26a and 26b, respectively. When a positive current is applied to the bases of Darlington pair coupling transistors 48a and 50a, the first Darlington pair transistors 48a and 44a are activated, but the second Darlington pair transistor 50a and 46a are deactivated. On the other hand, when a negative current is applied to the bases of the Darlington coupling transistors 48b and 50b, the fourth Darlington pair transistors 50b and 46b are activated, but the third Darlington pair transistors 48b and 44b are deactivated.

Accordingly, currents effectively flow from the first Darlington pair of transistors 48a and 44a to the fourth Darlington pair of transistors 46b and 50b and the ground potential source via the degaussing coil 14 and the first capacitor 22. Inversely, when negative voltage is applied to the bases of the Darlington coupling transistors 48a and 50a and positive voltage is applied to the bases of the Darlington coupling transistors 48b and 50b, the second and third Darlington pairs of transistors are activated and the first and fourth Darlington pairs of transistors are deactivated.

Thus, the high frequency currents, power amplified by the power amplifiers 28a and 28b are applied to the degaussing coil 14.

The second capacitor 32 is charged when the first relay switch 16a is the ON state and discharges when the first relay switch 16a has been made OFF. The discharge current from the second capacitor 32 flows as supply current to the power amplifiers 28a and 28b.

Therefore, as the supply voltage to the power amplifiers 28a and 28b gradually decreases when the first relay switch 16a is turned OFF, the outputs from the power amplifiers 28a and 28b gradually decrease, accordingly and soon become zero (0). The attenuated current resulting from this effect flows to the degaussing coil 14, thus causing degaussing. High degaussing effect is obtainable if the resonance frequency presented in the series circuit of the degaussing coil 14 and the first capacitor 22 equals the oscillation frequency of the oscillator 24. After the degaussing has been carried out, the second relay switch 16b is turned OFF to prevent current from flowing to the resonance circuit.

Further, as a modified embodiment of the present invention, the pre-amplifiers and the power amplifiers are each combined into one circuit, another end of the resonance circuit is connected to ground potential source and a single signal from the oscillator fed to the amplifying arrangement, the same degaussing effect is obtained.

As described above, the present invention can provide an extremely effective degaussing circuit.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

## Claims

1. Degaussing circuit comprising a degaussing coil means (14) and means for feeding an AC degaussing current the amplitude of which decreases with time to the degaussing coil means characterised in that AC degaussing current feed means comprises:-
an oscillator (24) for supplying a high frequency current;
an amplifier means (26a, 26b, 28a, 28b) for amplifying the high frequency current to produce said AC degaussing current; and
means (16a, 32) for feeding a reducing with time voltage the amplitude of which decreases with time to said amplifying means to effect a corresponding reducing amplification of said high frequency current.

2. A degaussing circuit according to claim 1 wherein said amplifying means has an output power amplifier stage (28a, 28b) and said voltage reducing with time is the supply voltage for the power amplifier stage (28a, 28b).

3. A degaussing circuit according to claim 1 or 2 wherein said means for feeding a voltage reducing with time comprises a DC voltage source (30), a storage capacitor (32), and switch means (16a) connected in series between the source (30) and the capacitor (32) to permit or interrupt current flow from the source to the capacitor; the storage capacitor (32) discharging and supplying the gradually reducing voltage upon interruption by the switch means (16a) of said current flow to the capacitor.

4. A degaussing circuit according to claim 2 or claim 3 appended to claim 2 including second switch means (16b) for interrupting the high frequency input to said output power amplifying stage after completion of a degaussing operation.

5. A degaussing circuit comprising a degaussing coil means (14), characterised in that the degaussing circuit further comprises:
an oscillator means (24) for supplying a high frequency current to the degaussing coil means (14);
an amplifier means (26a, 26b, 28a, 28b) for amplifying the high frequency current from the oscillator means (24) for driving the degaussing coil means (14);
a bias source for activating the amplifier means (26a, 26b, 28a, 28b);
a first capacitor means (32) for applying a gradually reducing bias change of the bias to the amplifier means (26a, 26b, 28a, 28b);
a first switch means (16a) for controlling the capacitor means (32) for charging the capacitor means (32) when the switch means (16a) has been turned ON and then for causing the gradual reducing of the bias change; and
a time period controller means (18) for regulating the operation period of the switch means (16a) thus causing the charge and the discharge of the capacitor means (32).

6. A degaussing circuit of claim 5, further comprising a second switch means (16b) for disconnecting the high frequency current to the degaussing coil means (14) after the completion of the discharge operation of the capacitor means (32).

7. A degaussing circuit according to claim 3, claim 4 appended to claim 3, claim 5 or claim 6, further comprising a second capacitor means (22) coupled in series with the degaussing coil means (14) for producing a resonant circuit with a frequency of a resonance equal to the frequency of the high frequency current.

## Patentansprüche

1. Entmagnetisierschaltung, umfassend eine Entmagnetisierspulenvorrichtung (14) und eine Vorrichtung zum Einspeisen eines Entmagnetisier-Wechselstroms, dessen Amplitude im Lauf der Zeit abfällt, in die Entmagnetisierspulenvorrichtung, dadurch gekennzeichnet, daß die Entmagnetisier-Wechselstrom-Einspeisevorrichtung umfaßt
einen Oszillator (24) zum Erzeugen eines hochfrequenten Stroms,
eine Verstärkervorrichtung (26a, 26b, 28a und 28b) zum Verstärken des hochfrequenten Stroms, um den Entmagnetisierungs-Wechselstrom zu erzeugen, und
Vorrichtungen (16a und 32) zum Einspeisen einer Spannung, deren Amplitude mit der Zeit abfällt, in die Verstärkervorrichtung, um eine entsprechende Verstärkungsverminderung des hochfrequenten Stroms zu bewirken.

2. Entmagnetisierschaltung nach Anspruch 1, wobei die Verstärkervorrichtung eine Ausgangs-Leistungsverstärkerstufe (28a, 28b) aufweist und die mit der Zeit abfallende Spannung die Versorgungsspannung für die Leistungsverstärkerstufe (28a, 28b) ist.

3. Entmagnetisierschaltung nach Anspruch 1 oder 2, wobei die Einrichtung zum Einspeisen einer mit der Zeit abfallenden Spannung eine Gleichspannungsquelle (30), einen Speicherkondensator (32) und eine Schaltervorrichtung (16a) umfaßt, die zwischen die Quelle (30) und den Kondensator (32) in Reihe geschaltet ist, um den Stromfluß von der Quelle zum Kondensator zu gestatten oder zu unterbrechen, und sich der Kondensator (32) durch die Unterbrechung des Stromflusses zum Kondensator durch die Schaltervorrichtung (16a) entlädt und die allmählich abfallende Spannung einspeist.

4. Entmagnetisierschaltung nach Anspruch 2 oder 3, wenn abhängig von Anspruch 2, umfassend eine zweite Schaltervorrichtung (16b), um nach Abschluß des Entmagnetisiervorgangs das hochfrequente Eingangssignal für die Leistungsverstärkerstufe zu unterbrechen.

5. Entmagnetisierschaltung, umfassend eine Entmagnetisierspulenvorrichtung (14), dadurch gekennzeichnet, daß die Entmagnetisierschaltung zudem umfaßt:
eine Oszillatorvorrichtung (24) zum Einspeisen eines hochfrequenten Stroms in die Entmagnetisierspulenvorrichtung (14),
Verstärkervorrichtungen (26a, 26b, 28a und 28b) zum Verstärken des hochfrequenten Stroms aus der Oszillatorvorrichtung (24), um damit die Entmagnetisierspulenvorrichtung (14) anzusteuern,
eine Vorspannungsquelle zum Aktivieren der Verstärkervorrichtungen (26a, 26b, 28a und 28b),
eine erste Kondensatorvorrichtung (32) zum Anlegen einer allmählich kleiner werdenden Änderung der Vorspannung für die Verstärkervorrichtungen (26a, 26b, 28a und 28b),
eine erste Schaltervorrichtung (16a) zum Regeln der Kondensatorvorrichtung (32), geeignet zum Laden der Kondensatorvorrichtung (32), wenn die Schaltervorrichtung (16a) eingeschaltet wurde, und dazu, dann das allmähliche Vermindern der Vorspannungsänderung zu bewirken, und
eine Zeitperioden-Reglervorrichtung (18) zum Regeln der Betriebsperiode der Schaltervorrichtung (16a), wodurch das Laden und Entladen der Kondensatorvorrichtung (32) bewirkt wird.

6. Entmagnetisierschaltung nach Anspruch 5, zudem umfassend eine zweite Schaltervorrichtung (16b) zum Unterbrechen des hochfrequenten Stroms zur Entmagnetisierspulenvorrichtung (14) nach Abschluß des Entladevorgangs der Kondensatorvorrichtung (32).

7. Entmagnetisierschaltung nach Anspruch 3, Anspruch 4 wenn abhängig von Anspruch 3, Anspruch 5 oder Anspruch 6, ferner umfassend eine zweite Kondensatorvorrichtung (22), die mit der Entmagnetisierspulenvorrichtung (14) in Reihe geschaltet ist, um einen Resonanzkreis zu erzeugen, dessen Resonanzfrequenz gleich der Frequenz des hochfrequenten Stroms ist.

## Revendications

1. Circuit de démagnétisation comprenant un moyen formant une bobine de démagnétisation (14) et un moyen pour amener un courant alternatif de démagnétisation, dont l'amplitude diminue avec le temps, au moyen formant bobine de démagnétisation, caractérisé en ce que le moyen d'amenée de courant alternatif de démagnétisation comprend :
un oscillateur (24) pour fournir un courant haute fréquence ;
un moyen formant amplificateur (26a, 26b, 28a, 28b) pour amplifier le courant haute fréquence afin de produire ledit courant alternatif de démagnétisation ; et
des moyens (16a, 32) pour appliquer une tension, dont l'amplitude diminue avec le temps, audit moyen d'amplification afin d'effectuer une amplification correspondante allant en diminuant dudit courant haute fréquence.

2. Un circuit de démagnétisation selon la revendication 1, dans lequel ledit moyen d'amplification présente un étage formant amplificateur de la puissance de sortie (28a, 28b) et où ladite tension diminuant avec le temps est la tension d'alimentation de l'étage formant amplificateur de puissance (28a, 28b).

3. Un circuit de démagnétisation selon la revendication 1 ou 2, dans lequel ledit moyen pour appliquer une tension diminuant avec le temps comprend une source de tension à courant continu (30), un condensateur de stockage (32) et un moyen de commutation (16a) relié en série entre la source (30) et le condensateur (32) pour permettre ou interrompre l'écoulement de courant depuis la source vers le condensateur ; le condensateur de stockage (32) se déchargeant et fournissant la tension diminuant graduellement lors de l'interruption par le moyen de commutation (16a) dudit écoulement de courant vers le condensateur.

4. Un circuit de démagnétisation selon la revendication 2 ou la revendication 3 dans sa dépendance de la revendication 2, comprenant un second moyen de commutation (16b) pour interrompre l'entrée haute fréquence vers l'étage d'amplification de la puissance de sortie après achèvement d'une opération de démagnétisation.

5. Un circuit de démagnétisation comprenant un moyen formant bobine de démagnétisation (14), caractérisé en ce que le circuit de démagnétisation comprend en outre :
un moyen formant oscillateur (24) pour fournir un courant haute fréquence au moyen formant bobine de démagnétisation (14) ;
un moyen formant amplificateur (26a, 26b, 28a, 28b) pour amplifier le courant haute fréquence provenant du moyen formant oscillateur (24) afin de commander le moyen formant bobine de démagnétisation (14) ;
une source de polarisation pour actionner le moyen formant amplificateur (26a, 26b, 28a, 28b) ;
un premier moyen à condensateur (32) pour appliquer un changement de polarisation diminuant graduellement de la polarisation au moyen formant amplificateur (26a, 26b, 28a, 28b) ;
un premier moyen de commutation (16a) pour commander le moyen à condensateur (32) pour charger le moyen à condensateur (32) lorsque le moyen de commutation (16a) a été mis en service et pour amener ensuite la diminution graduelle du changement de polarisation ; et
un moyen formant organe de commande de période de temps (18) pour régler la période de fonctionnement du moyen de commutation (16a) en provoquant ainsi la charge et la décharge du moyen à condensateur (32).

6. Un circuit de démagnétisation de la revendication 5 comprenant en outre un second moyen de commutation (16b) pour déconnecter le courant haute fréquence vers le moyen formant bobine de démagnétisation (14) après achèvement de l'opération de décharge du moyen à condensateur (32).

7. Un circuit de démagnétisation selon la revendication 3, la revendication 4 dans sa dépendance de la revendication 3, la revendication 5 ou la revendication 6, comprenant en outre un second moyen à condensateur (22) relié en série au moyen formant bobine de démagnétisation (14) pour produire un circuit résonnant avec une fréquence de résonance égale à la fréquence du courant haute fréquence.
